# EUROPEAN PATENT SPECIFICATION

(11) **EP 3 430 717 B1**
(45) Date of publication and mention of the grant of the patent: **31.12.2025**
(21) Application number: 17722851.7
(22) Date of filing: 13.03.2017
(51) Int. Cl.: H02S 20/25

(54) **PHOTOVOLTAIC BUILDING PANEL**
FOTOVOLTAIKBAUPLATTE
PANNEAU DE CONSTRUCTION PHOTOVOLTAÏQUE

(30) Priority: 14.03.2016 EE 201600005
(43) Date of publication of application: 23.01.2019
(73) Proprietor: Roofit Solar Energy Oü, 13525 Tallinn (EE)
(72) Inventor: JAGOMÄGI, Andri, 11315 Tallinn (EE)
(74) Representative: AAA Patendibüroo OÜ
(86) International application number: PCT/IB2017/000343
(87) International publication number: WO 2017/158429

(56) References cited:
- EP-A1- 2 738 318
- EP-A2- 1 071 137
- EP-A2- 1 071 138
- WO-A1-2015/079276
- WO-A2-2008/137966
- DE-B- 1 272 512
- FR-A1- 2 979 365
- US-A- 4 224 775
- US-A1- 2012 312 373

## Description

### TECHNICAL FIELD

The present invention relates to the field of energetics and building materials, more particularly to the field of sheet metal building materials with electricity-producing solar panels, e.g. roof and wall panels and façade elements.

### BACKGROUND ART

With regard to the wider spread of solar energetics, more and more electricity generating solar panels are installed on the roofs of buildings. In order to simplify the installation process and to reduce material costs, it is useful to integrate the elements that produce electricity from solar radiation on the surface of conventional building materials. These materials usually include various roofing or façade covers.

Various solar panels integrated onto sheet metal building materials are known from prior art, which are described for example in patent documents US4189881, WO92/09768 and US5232518. US4189881 describes solar panels integrated on the surface of sheet metal, the edges of which have been folded up for rolled connection. Patent application WO92/09768 describes the sheet metal roofing material with rolled up edges onto which photovoltaic solar panels, based on laminated amorphous silicon, have been arranged. These elements, connected to each other by rolled connection and placed periodically, form a water-proof and electricity generating covering on a roof or façade. US5232518 describes photovoltaic solar panels integrated on the sheet metal that has contacts rigidly connected to the sheet metal.

The objective of aforementioned solutions is the integration of sheet metal materials employed in construction with solar panels either in a factory or a construction site. Solar panels of aforementioned solutions are either laminated to the surface of the sheet metal or connected to it by other means using adhesive connection. Whereas, the sheet metal construction material has not been specifically shaped for the integration of solar panels. The deficiency of such structures is that the topmost surface of the solar panel is higher than the surface of the sheet metal - the structure of the photovoltaic solar panel laminated on the surface of the regular rolled sheet panel is several millimetres higher than the surface of the rolled sheet panel. Therefore, the edges of the solar panel are exposed to the adverse mechanical and chemical effects of the external environment. The uppermost edge of the solar panel integrated in that manner is the most critical, by mechanically preventing the movement of water, snow and ice. The bulk of ice and snow accumulated behind the edge renders mechanical stresses to the upper edge of the solar panel and the adhesive connection between the solar panel and the rolled sheet can cause damage to the solar panel as well as to the connection. Microcracks develop in the structure of the damaged solar panel, and water molecules moving through these cracks cause corrosion in the electrical components of the solar panel, which reduces the efficiency of the latter. Both, the upper edge of the panel as well as lateral edges are affected out-of-doors by repeated melting and freezing cycles. The microcrack developed in the edge or adhesive connection of the solar panel seizes water, which expands by freezing and increases the crack width. Repeated freezing cycles press the initial crack even wider as a result of which the solar panel may completely separate from the rolled steel. For the same reasons, the outer glass or plastic layer protecting the solar panel may separate due to ice, and delamination of light-sensitive elements may occur.

Therefore, the edges of the solar panel and of the adhesive connection are easily damaged by the mechanical and chemical effects of the environment. Firstly, a large mass of snow or ice accumulated behind the glass edge of such a solar panel installed on the roof may tear the solar panel structure away from the sheet metal base material. Secondly, the adhesive connection between solar panel structure and sheet metal base material may be damaged due to recurring freezing and melting cycles.

Document EP2738318A1, 04.06.2014, Kingspan Holdings (IRL) Limited discloses an insulating panel comprising a first or external sheet, a second or inner sheet with an insulating body which is an insulating foam therebetween. The foam is of polyisocyanurate foam or a phenolic foam. The panel is a roof panel and the external sheet and the internal sheet are of metal, such as galvanised and/or painted steel. The external sheet has a cut-away rectilinear opening therein and a photovoltaic solar collector is mounted in the opening in the external sheet. The body of insulating material extends between inner face of the internal sheet and the inner faces of the external sheet and the photovoltaic solar collector module. The solar collector module is sealed to the external sheet using the sealant.

Document US4224775, 30.09.1980, AMCA International Corporation discloses a building roof structure comprising a large number of metal panels, which are substantially identical in shape, elongated, and laid side by side. They are seamed together so that each side of the roof becomes substantially a one piece membrane formed of a series of integrated panels. The sidewalls consisting of panels erected side by side and fastened together but other sidewall constructions can be used with the roof structure. Other relevant dislcosures of building roof structures comprising PV elements are described in US 2012/312373 A1 and WO 2008/137966 A2.

### DISCLOSURE OF INVENTION

The present invention provides a photovoltaic construction panel comprising a panel manufactured from sheet metal according to claim 1.

The object of present invention is to provide a solution for reducing the loss of efficiency resulting from mechanical stress, cracks, corrosion and structural damage due to environmental impacts in electrical building panels that are used to cover the building exteriors (e.g. roofs, façades and other parts of the building) to generate electricity using solar energy.

Unlike previously known solutions, the structure of present solution is better protected against the impacts of external environment, thus achieving longer life span and higher electricity yield of the product.

The goal of the invention has been achieved by way of the photovoltaic construction panel according to the invention, which is formed from the panel manufactured from sheet metal and from the photovoltaic element (e.g. solar panel) installed into a recess or elevation pressed into it in such a way that the upper surface or upper edge of the panel and solar panel integrated onto it is plane. This provides better protection of the photovoltaic element of the construction panel against harmful effects of the external environment and avoids the problems known from prior art regarding the mechanical stresses, cracks, corrosion and construction damages and thus ensures higher efficiency and longer life span.

The objective of the rolled sheet metal panel is to protect all or some of the edges of the solar panel and edges of connections against harmful environmental effects. The shape of the sheet metal (e.g. steel, copper, aluminium, tin or metal alloy rolled sheet, profiled sheet, sandwich panel or other sheet metal) construction panel is formed by stamping, step moulding the sheet metal or by some other sheet metal forming method. In various alternative embodiments, the construction panel has been formed by using a galvanized panel or a panel covered by some other protective layer.

### BRIEF DESCRIPTION OF DRAWINGS

The present invention is now described in more detail with reference to drawings where:
Figure 1 shows a rolled sheet panel of prior art;
Figure 2 shows the cross section of the rolled sheet panel of Figure 1;
Figure 3 depicts the cross section of two adjacent prior art rolled sheet panels connected by rolled connection;
Figure 3a depicts the prior art unformed rolled sheet panel to which a solar panel has been attached;
Figure 4 depicts the first embodiment of the sheet-metal formed panel for the photovoltaic construction panel according to present invention not covered by the claims;
Figure 5 shows the cross section of the panel of Figure 4;
Figure 6 depicts the first embodiment of the photovoltaic construction panel according to present invention not covered by the claims;
Figure 7 shows the cross section of the photovoltaic construction panel of Figure 6;
Figure 8 shows the cross section of two photovoltaic construction panels installed side by side;
Figure 9 shows the longitudinal sectional view of two sequentially installed photovoltaic panels according to the first embodiment not covered by the claims;
Figure 10 depicts the section of the photovoltaic construction panel;
Figure 11 depicts the second embodiment of the sheet-metal formed panel for the photovoltaic construction panel;
Figure 12 depicts the second embodiment of the photovoltaic construction panel;
Figure 13 shows the longitudinal sectional view of two sequentially installed photovoltaic panels according to the second embodiment not covered by the claims;
Figure 14 depicts the third embodiment of the sheet-metal formed panel for the photovoltaic construction panel not covered by the claims;
Figure 15 depicts the third embodiment of the photovoltaic construction panel not covered by the claims;
Figure 16 shows the longitudinal sectional view of two sequentially installed photovoltaic panels according to the third embodiment not covered by the claims;
Figure 17 depicts the fourth embodiment of the sheet-metal formed panel for the photovoltaic construction panel according to present invention;
Figure 18 depicts the fourth embodiment of the photovoltaic construction panel according to present invention;
Figure 19 shows the longitudinal sectional view of two sequentially installed photovoltaic panels according to the fourth embodiment;
Figure 20 depicts the fifth embodiment of the sheet-metal formed panel for the photovoltaic construction panel according to present invention not covered by the claims;
Figure 21 depicts the fifth embodiment of the photovoltaic construction panel according to present invention not covered by the claims;
Figure 22 shows the longitudinal sectional view of two sequentially installed photovoltaic panels according to the fifth embodiment not covered by the claims;
Figure 23 depicts the sixth embodiment of the photovoltaic construction panel;
Figure 24 shows the cross section of the photovoltaic construction panel of Figure 23;
Figure 25 depicts the seventh embodiment of the photovoltaic construction panel according to present invention as integrated on a sandwich panel not covered by the claims;
Figure 26 shows the cross section of the panel of Figure 25;
Figure 27 depicts a house that uses the photovoltaic construction panel according to present invention as its roof covering;
Figure 28 depicts a house that uses the photovoltaic construction panel according to present invention as its façade cladding.

### BEST MODE FOR CARRYING OUT THE INVENTION

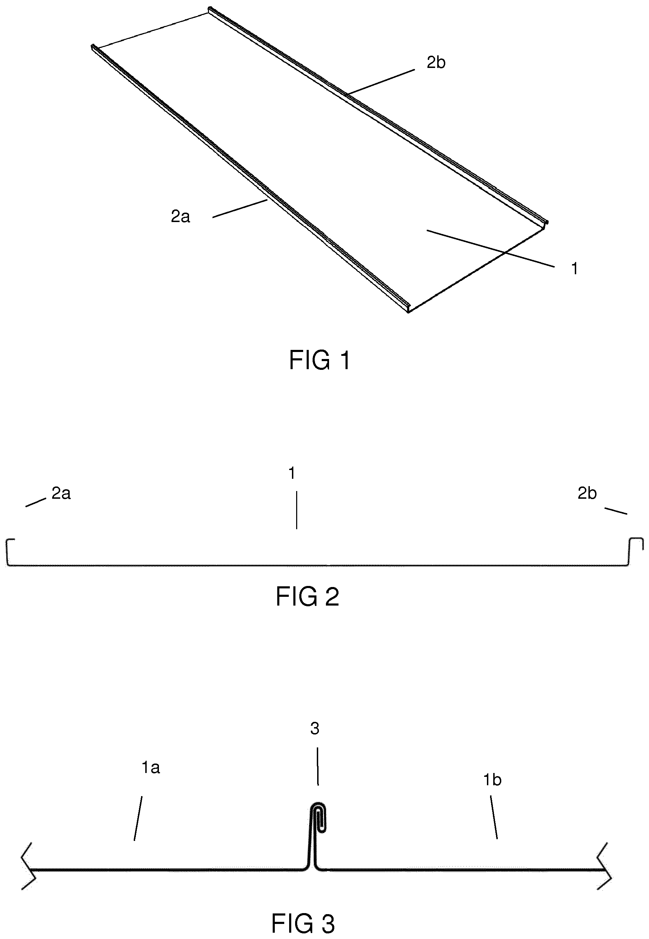

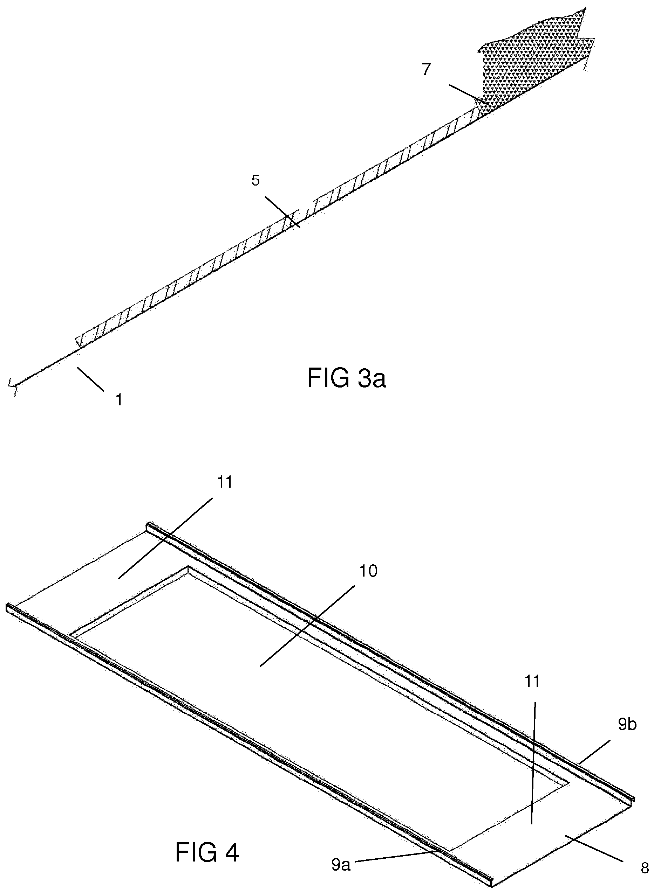

Figures 1 and 2 depict a rolled-sheet panel 1 of prior art, which has edges 2a and 2b rolled up for creating a rolled-sheet connection and increasing the rigidity of panel 1. Figure 3 depicts rolled sheet panels 1a and 1b adjacent on the façade or roof, and which are connected to each other by rolled connection 3; Figure 3a shows a photovoltaic solar panel 5 integrated on a conventional rolled sheet panel 1. Since in this solution the solar panel is above the rolled sheet plane, it makes the snow and ice accumulate behind the upper edge 7 of the panel 1. The large mass of snow and ice generates tension in the top of the solar panel, which causes damage in the solar panel structure and in the adhesive connection between the panel 5 and rolled sheet panel 1. Damaged structure cannot provide hermetic protection to the electrical elements of the solar panel against oxygen and water. This leads to corrosion and loss of productivity of the solar panel. As a result of mechanical stress the solar panel 5 separates from the rolled sheet panel 1 and/or delamination of light-sensitive elements occurs.

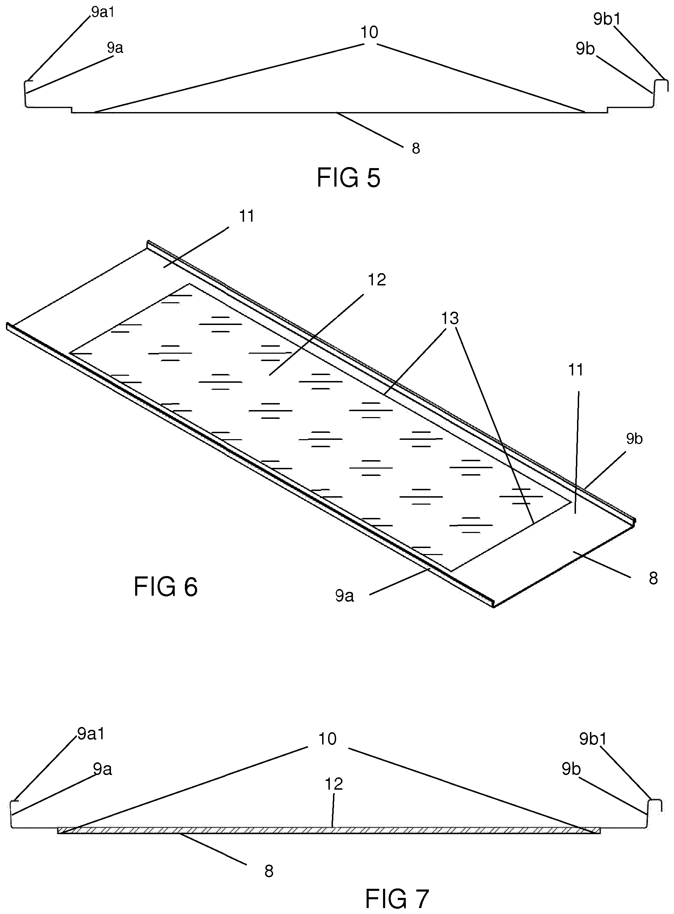

The photovoltaic construction panel of Figures 4 to 25 has been formed of a panel 8 manufactured from sheet metal (e.g. rolled sheet, profiled sheet), the lateral edges 9a and 9b of which have been rolled up for rolled connection, and of at least one rigid or flexible photovoltaic element 12 (e.g. solar panel) that has been added into at least one formed portion (e.g. recess or elevation) 10, created in the planar portion between the lateral edges 9a and 9b of panel 8, which includes the overlap portion 11, in a manner that the top surfaces of the formed portion 10 of panel 8 and of the photovoltaic element 12 added into it are on one plane 13. Whereas, the top portion 9a1 of one rolled up lateral edge 9a has been turned towards the panel 8 and the top part 9b1 of the other rolled up lateral edge 9b has been turned outside.

The photovoltaic element 12 that has been added to the formed portion 10, has been attached for example by adhesive connection, which has been developed for example on the basis of a material activating chemically, thermally, mechanically or in some other way. Photovoltaic element 12 is connectable to the electrical board by coupling means. Photovoltaic solar panels of the invention to be attached to the building are electrically connected to each other in parallel or in series, either directly or through AC/DC or DC/DC converter.

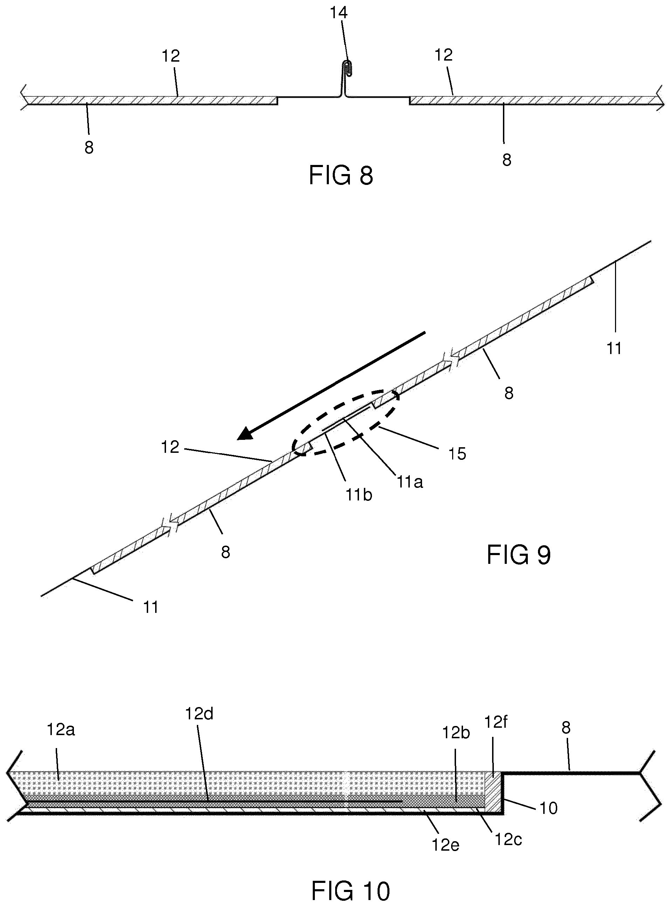

Figure 8 shows the connecting of adjacent photovoltaic construction panels as installed to the building where a joint 14 has been formed from the lateral edge 9a of one construction panel and of the lateral edge 9b of the other construction panel.

The water resistant overlay 15 formed from the overlays 11 of photovoltaic construction panels placed in series on the building is depicted on Figure 9, which indicates with an arrow the direction of the flow of water, snow, ice, etc. The figure shows longitudinal sectional view of photovoltaic construction panels according to the invention placed consecutively onto the roof or façade of the building. To form a waterproof overlay 15 the overlap portion 11a of the upper panel has been placed onto the overlap 11b of the lower panel 8. In alternative embodiments, the overlap portion 11a of the upper panel 8 has been placed over the overlap portion 11b of the lower panel 8 in such a way that the overlap portion 11a extends over the edge of the photovoltaic element 12.

The edges of the photovoltaic construction panel connected in such a way are protected from the harmful effects of the environment. Since the surface of the photovoltaic element 12 of the photovoltaic construction panel is plane with the surface 13 of the panel 8, there will be no mechanical resistance that interferes with water, snow and ice sliding off the roof. Thus, there is no possibility for the snow and ice to accumulate behind the upper edge of the construction panel and for the mechanical and chemical damage to occur.

The first embodiment of the photovoltaic construction panel not covered by the claims is depicted on Figures 4 to 9 where the shaped portion 10 is a recess and the overlap portion 11 has been formed on both ends of the shaped portion 10 and the photovoltaic element 12 placed in the shaped portion 10 stays between the two overlap portions 11.

Figure 10 depicts the sectional view of the wiring diagram of the photovoltaic construction panel not covered by the claims. Photovoltaic element 12 has been placed in the shaped part 10 of the panel 8, which is made of a transparent layer 12a (e.g. glass or other transparent material), transparent lamination material 12b connected with it and protective coating 12c applied to it for the electrical isolation of the photovoltaic element from the panel 8, photovoltaic material 12d applied between the lamination material and protective coating (e.g. crystalline silicon, thin-film material, GaAs, multijunction structure, dye-sensitized material, perovskite, organic or some other photovoltaic material) and fastening means 12e (e.g. adhesive layer) for attaching the photovoltaic element 12 to the shaped portion 10 of the panel 8. The portion between the photovoltaic element 12 and panel 8 is filled with a sealant 12f.

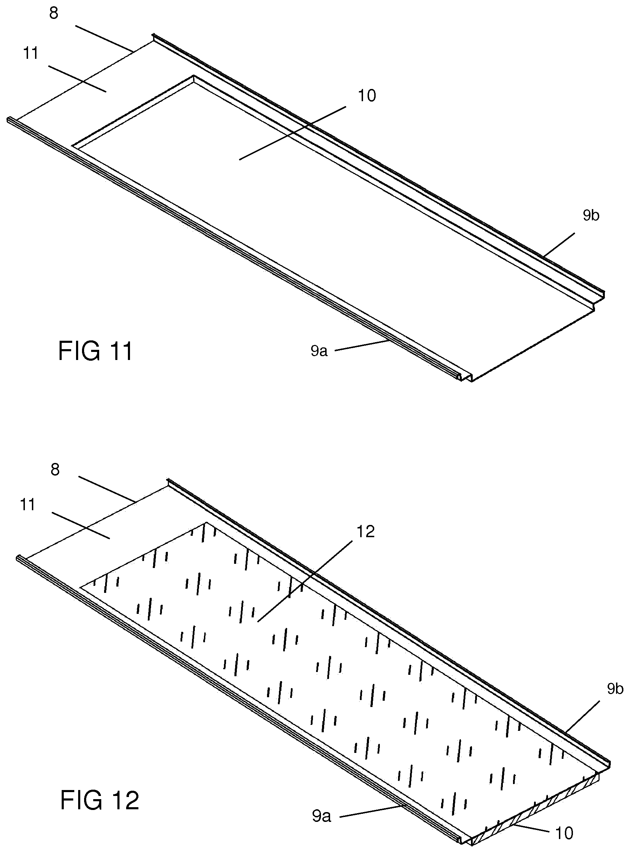

The second embodiment of the photovoltaic construction panel not covered by the claims is depicted on Figures 11 to 13 where the shaped portion 10 is pressed into the planar portion between lateral edges 9a and 9b in such a way that the overlap portion 11 has been formed on one end of the shaped portion 10 and the photovoltaic element 12 has been placed in the shaped portion 10 in such a way that it extends from the inner edge of the overlap portion 11 to the edge of the panel 8.

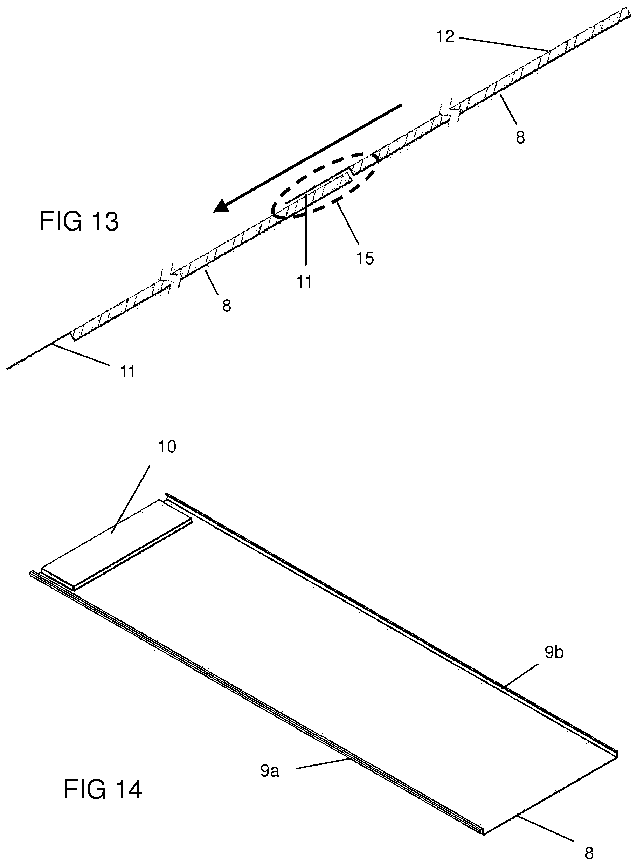

According to the second embodiment not covered by the claims depicted on Figure 13, the waterproof overlay 15 of photovoltaic construction panels placed consecutively on the building has been prepared in such a way that the lower overlay portion 11 of the upper panel 8 has been placed on the photovoltaic element of the lower panel 8 in such a way that photo-electrically sensitive elements would not be covered. Rainwater flow direction has been indicated with an arrow. The edges of the photovoltaic construction panel connected in such a way are protected from the harmful effects of the environment. Since the surface of the photovoltaic element 12 is on the same plane as the surface of the panel 8, there will be no mechanical resistance that interferes with the water, snow and ice sliding off the roof. The upper edge 12 of the photovoltaic element 12 is covered with the overlay portion 11 of the panel 8 located above, thus completely preventing the access of water and snow to the upper edge of the photovoltaic construction panel.

The third embodiment of the photovoltaic construction panel not covered by the claims is depicted on Figures 14 to 16 where the shaped portion 10 is formed in the planar portion between lateral edges 9a and 9b in such a way that an elevation 10 has been formed on one end of the panel 8 in a planar portion between lateral edges 9a and 9b of the panel 8 and the overlap portion 11 has been formed on the other end of the panel 8.

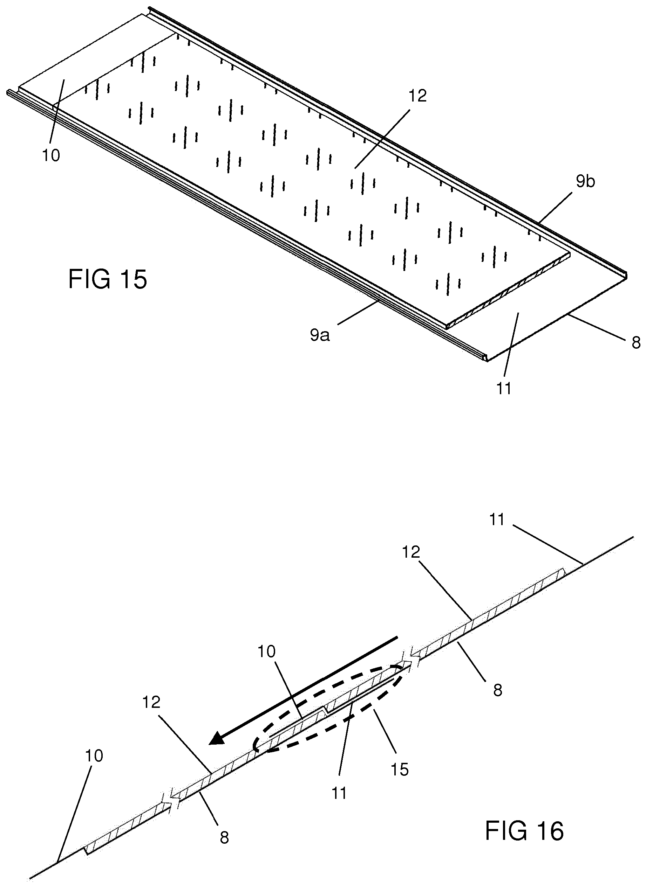

The waterproof overlay 15 depicted on Figure 16 is formed in such a way that a photovoltaic element 12 has been integrated against a shaped portion 10 formed on one end of the panel 8, and the overlay portion 11 has been formed on the other end of the panel, and photovoltaic construction panels placed consecutively on the building have been prepared in such a way that the shaped portion 10 of the upper panel 8 is on top of the overlay 11 end of the lower panel 8, whereas the shaped edge of the upper panel 8 extends partially over the photovoltaic element 12 of the lower panel 8, while not covering the photo-electrically sensitive elements. Rainwater flow direction has been indicated with an arrow. The photovoltaic construction panel is therefore well protected against water, snow and ice because the most critical, or upper, edge is protected by the shaped portion 10 of the panel 8 located above. With the shaped portion 10 the upper edge of the photovoltaic element of the photovoltaic construction panel installed just below on the building is protected against the damaging effects of the environment.

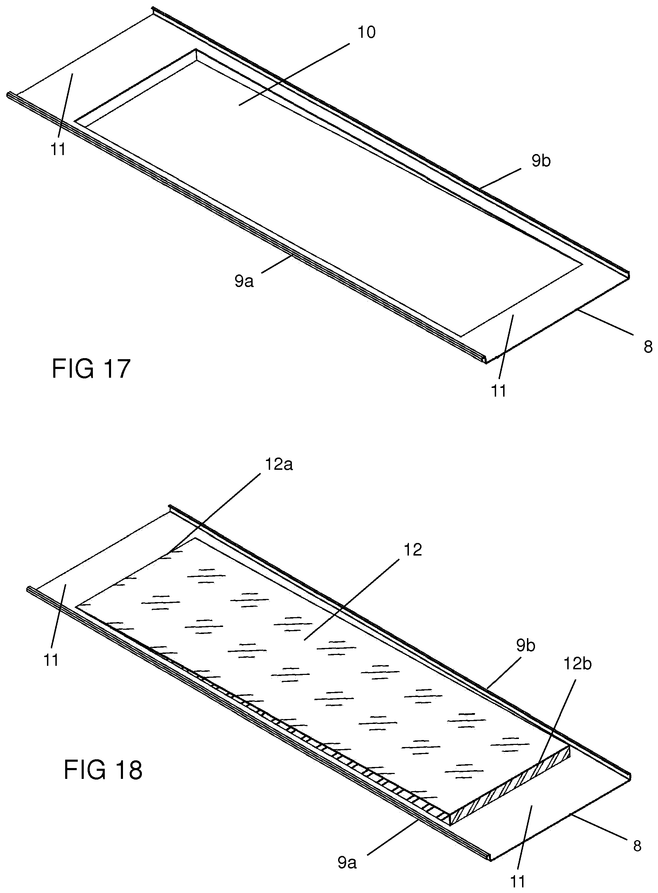

The fourth embodiment of the photovoltaic construction panel according to the invention is depicted on Figures 17 to 19 where the shaped portion 10 is a recess which varies in depth in such a way that the upper edge of the end of the photovoltaic element 12 would be on the same plane as the planar portion of the panel 8, which includes one overlay portion 11, and the end 12b of the photovoltaic element 12 that is added in the shaped portion 10, which includes the other overlay portion, would be higher from the planar portion of panel on the other end.

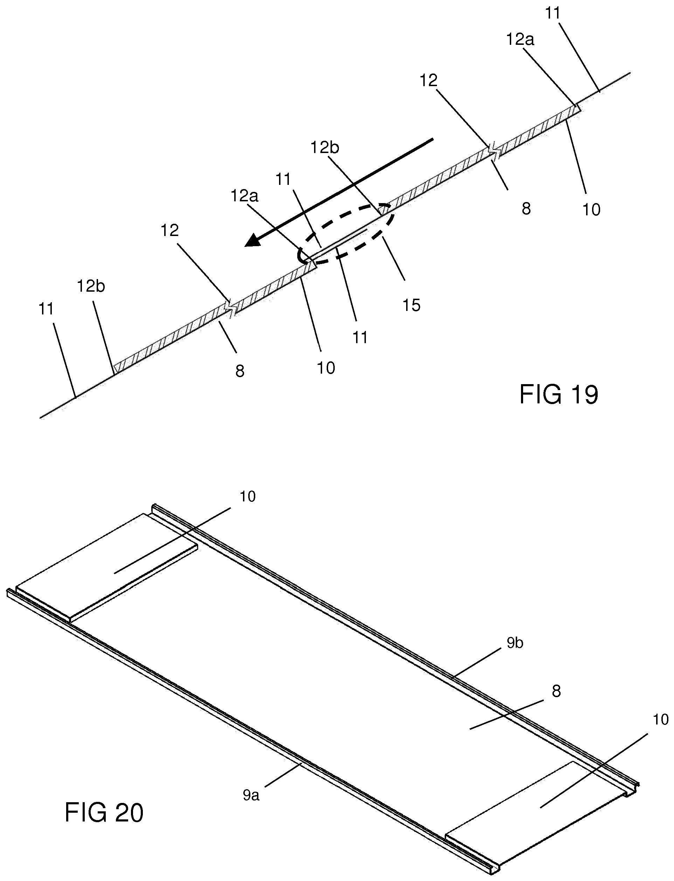

The waterproof overlay 15 of the photovoltaic construction panel placed consecutively on a building is displayed on Figure 19. According to the fourth embodiment, the waterproof overlay 15 has been prepared in such a way that the overlay portion 11 of the upper panel 8, which is lower than the end 12b of the photovoltaic element 12, has been placed on top of the overlay portion 11 of the lower panel 8, which is flush with the end 12a of the photovoltaic element, whereas the edge of the overlay portion 11 of the upper panel may also extend partially over the edge of the photovoltaic element 12 placed in the shaped portion 10 of the lower panel 8 up to the photo-electrically sensitive elements. Rainwater flow direction is indicated with an arrow.

The edges of the photovoltaic construction panel connected in such a way are well protected against water, snow and ice because the most critical edge of the construction panel is on the same plane as the surface of the sheet metal. Thus, there will be no mechanical resistance to interfere with the water, snow and ice sliding off the roof. If the upper edge of the photovoltaic element is covered with the lower edge of the photovoltaic panel located above, the access of water and snow to the upper edge of the solar panel is completely blocked.

The fifth embodiment of the photovoltaic construction panel not covered by the claims is depicted on Figures 20 to 22 where the shaped portion 10 is formed as elevations on both ends of the planar portion between lateral edges 9a and 9b of the panel 8 in such a way that the photovoltaic element 12 is placed between two shaped portions 10 in such a way that the height of the photovoltaic element 12 and of shaped portions 10 is planar whereas shaped portions 10 have been formed also into overlay portions 11.

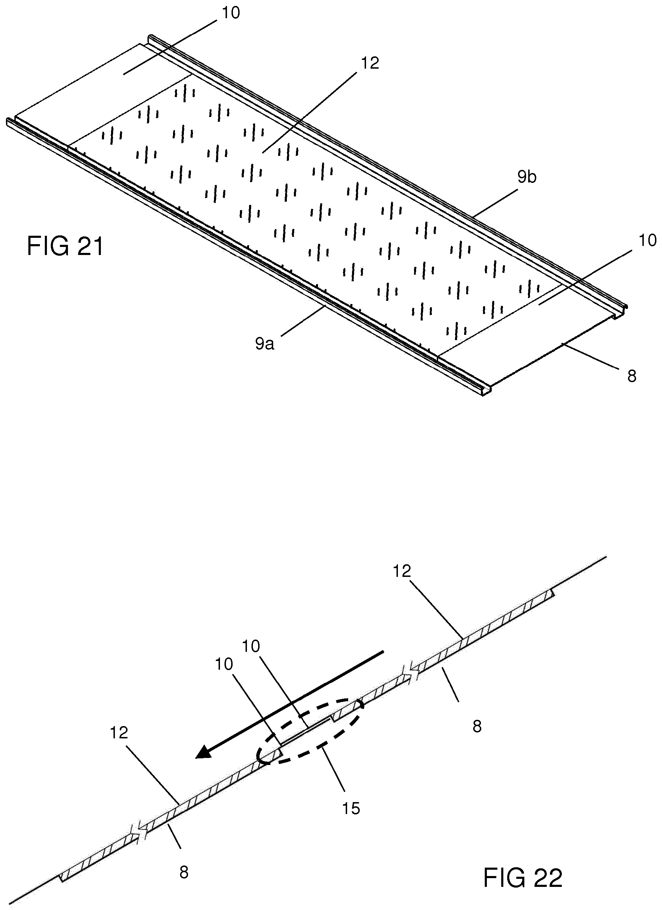

According to the fifth embodiment, the waterproof overlay 15 of photovoltaic construction panels placed consecutively on the building, which is depicted on Figure 22, is prepared in such a way that the overlay portion 11 formed from the shaped portion 10 of the upper panel 8 has been placed on top of the overlay portion formed from the shaped portion 10 of the lower panel 8. Whereas, the upper overlay portion may partially cover the lower photovoltaic element 12 in such a way that photo-electrically sensitive elements of the lower photovoltaic element would not be covered. Rainwater flow direction is indicated with an arrow.

With the overlay 15 formed in this manner the photovoltaic construction panel is well protected against water, snow and ice because the most critical, or upper, edge of the photovoltaic construction panel is protected by the elevations pressed into panel 8. Also, the lower edge of the photovoltaic panel located above may extend over the upper edge of the lower solar panel.

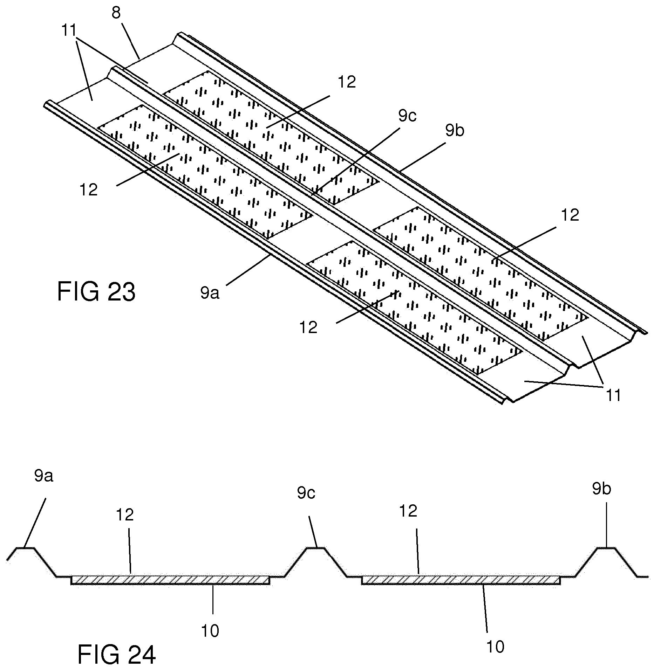

The sixth embodiment of the photovoltaic construction panel according to the present invention and other alternative embodiments are depicted on Figures 23 to 26 where the lateral edges 9a and 9b of the panel 8 are both turned outside and shaped portions 10 have been formed in the planar portion between the lateral edges 9a and 9b for photovoltaic elements 12 at least two side by side, whereas at least one profile 9c has been formed between adjacent shaped portions 10 in parallel with lateral edges 9a and 9b, whereas the outer ends of the panel 8 include on both ends at least two overlay portions 11, and by a profile 9c, which extends from edge to edge of the panel 8 length, the adjacent shaped portions 10 and photovoltaic elements 12 placed into them and overlay portions 11 have been separated.

A waterproof overlay has been created from the overlay portions 11 of photovoltaic construction panels placed consecutively on the building so that the overlay portion 11 of the lower panel 8 is covered with the overlay portion 11 of the upper panel. According to given embodiment, the shaped portions 10 are formed according to the shaped portions 10 of previous embodiments, either as recesses, elevations or as recesses and elevations.

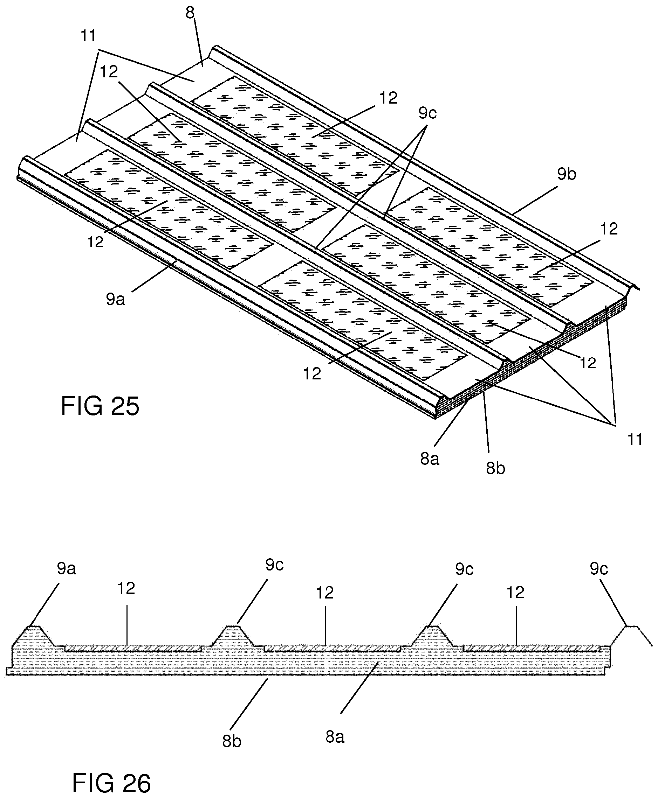

Additionally, the photovoltaic construction panel according to present invention has been completed with a sandwich panel under the panel 8, which consists of thermal insulation 8a with a sheet metal element 8b, which is exemplified on Figures 25 and 26, but which can be added to photovoltaic construction panels according to other embodiments.

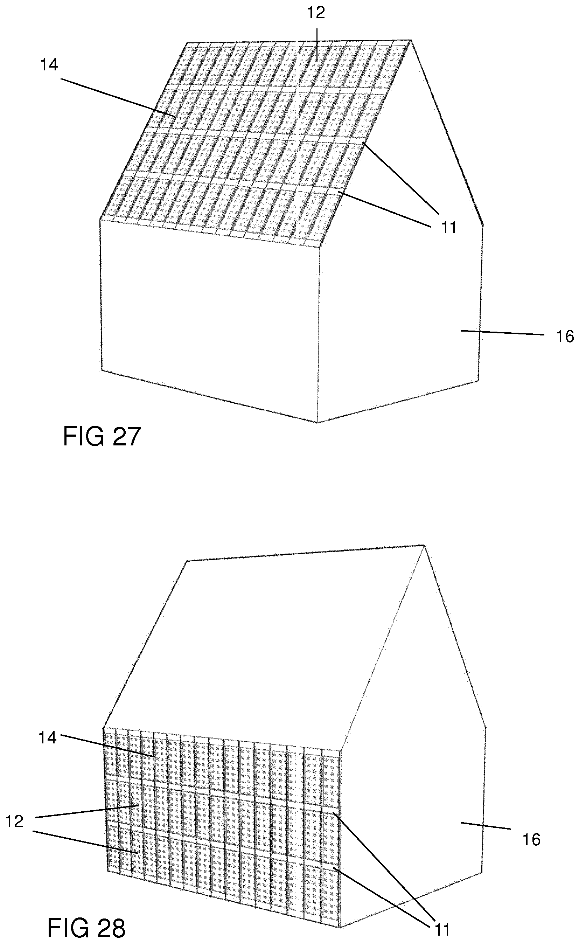

Using of the photovoltaic construction panel according to present invention is depicted on Figures 27 and 28.

Figures 27 and 28 show adjacent photovoltaic construction panels according to present invention, used for covering the external surfaces of a building 16, which are interconnected by the rolled connection 14 formed by lateral edges 9a and 9b and include photovoltaic elements 12 attached to the shaped portion 10, and the edges of photovoltaic construction panels placed consecutively on a building are covered with overlay portions 11 to form a waterproof overlay.

## Claims

1. A photovoltaic construction panel comprising a panel (8) manufactured from sheet metal, the lateral edges (9a and 9b) of which have been rolled up for connection (14), at least one overlay portion (11) at least at one end of the panel (8), at least one shaped portion formed into the panel (8) and at least one photovoltaic element (12), at least one shaped portion (10) has been formed in the planar portion between the lateral edges (9a) and (9b) of the panel (8) where at least one photovoltaic element (12) has been arranged so that the top surfaces of the shaped portion (10) of the panel (8) and of the photovoltaic element (12) arranged into it are on one plane and that a waterproof overlay (15) has been formed from at least one overlay portion (11), **characterised by that,** the shaped portion (10) is a recess which varies in depth in such a way that the upper edge of the end of the photovoltaic element (12) would be on the same plane as the planar portion of the panel (8), which includes one overlay portion (11), and the end (12b) of the photovoltaic element (12) that is added in the shaped portion (10), which includes the other overlay portion, is higher from the planar portion of panel on the other end.

2. The photovoltaic construction panel according to claim 1, **characterised by that** shaped portions (10) on photovoltaic elements (12) are arranged at least by two side by side, whereas at least one profile (9c) has been formed between two adjacent shaped portions (10) in parallel with lateral edges (9a) and (9b), outer ends of the panel (8) comprise at both ends at least two overlay portions (11), and adjoining shaped portions (10) and photovoltaic elements (12) installed into them and overlay portions (11) are separated by a profile (9c), which extends across the length of the panel (8) from end to end.

3. The photovoltaic construction panel according to claim 1 or 2, **characterised by that** a sandwich panel has been added under the panel (8).

## Patentansprüche

1. Photovoltaik-Baumodul, das ein Modul (8), das aus Blech gefertigt ist, dessen Seitenkanten (9a und 9b) zur Verbindung (14) aufgerollt wurden, mindestens einen Overlay-Abschnitt (11) mindestens an einem Ende des Moduls (8), mindestens einen in das Modul (8) eingeformten geformten Abschnitt und mindestens ein Photovoltaikelement (12) umfasst, wobei in dem ebenen Abschnitt zwischen den Seitenkanten (9a) und (9b) des Moduls (8) mindestens ein geformter Abschnitt (10) eingeformt ist, wo mindestens ein Photovoltaikelement (12) derart eingerichtet wurde, dass die Oberseiten des geformten Abschnitts (10) des Moduls (8) und des darin eingerichteten Photovoltaikelements (12) auf einer Ebene liegen, und das aus mindestens einem Overlay-Abschnitt (11) ein wasserdichtes Overlay (15) geformt ist, **dadurch gekennzeichnet, dass** der geformte Abschnitt (10) eine Vertiefung ist, deren Tiefe derart variiert, dass die Oberkante des Endes des Photovoltaikelements (12) auf derselben Ebene wie der ebene Abschnitt des Moduls (8), der einen Overlay-Abschnitt (11) einschließt, läge, und das Ende (12b) des Photovoltaikelements (12), das in den geformten Abschnitt (10) hinzugefügt wird, der den anderen Overlay-Abschnitt einschließt, höher als der ebene Abschnitt des Moduls an dem anderen Ende ist.

2. Photovoltaik-Baumodul nach Anspruch 1, **dadurch gekennzeichnet, dass** die geformten Abschnitte (10) auf Photovoltaikelementen (12) mindestens zu zweit nebeneinander eingerichtet sind, während mindestens ein Profil (9c) zwischen zwei angrenzenden geformten Abschnitten (10) parallel zu Seitenkanten (9a) und (9b) gebildet wurde, äußere Enden des Moduls (8) an beiden Enden mindestens zwei Overlay-Abschnitte (11) umfassen und benachbarte geformte Abschnitte (10) und die darin eingebauten Photovoltaikelemente (12) sowie die Overlay-Abschnitte (11) von einem Profil (9c) getrennt sind, das sich über die Länge des Moduls (8) von einem Ende zum anderen erstreckt.

3. Photovoltaik-Baumodul nach Anspruch 1 oder 2, **dadurch gekennzeichnet, dass** unter dem Modul (8) ein Sandwich-Modul hinzugefügt wurde.

## Revendications

1. Panneau de construction photovoltaïque comprenant un panneau (8) en tôle métallique, dont les bords latéraux (9a et 9b) ont été enroulés pour la connexion (14), au moins une partie de recouvrement (11) à au moins une extrémité du panneau (8), au moins une partie profilée formée dans le panneau (8) et au moins un élément photovoltaïque (12), au moins une partie profilée (10) a été formée dans la partie plane entre les bords latéraux (9a) et (9b) du panneau (8), où au moins un élément photovoltaïque (12) a été agencé de sorte que les surfaces supérieures de la partie profilée (10) du panneau (8) et de l'élément photovoltaïque (12) agencé dans celui-ci sont sur un même plan, et qu'un recouvrement étanche (15) a été formé à partir d'au moins une partie de recouvrement (11), **caractérisé en ce que,** la partie profilée (10) est un évidement qui varie en profondeur de telle sorte que le bord supérieur de l'extrémité de l'élément photovoltaïque (12) serait sur le même plan que la partie plane du panneau (8), qui inclut une partie de recouvrement (11), et l'extrémité (12b) de l'élément photovoltaïque (12) qui est ajouté dans la partie façonnée (10), qui inclut l'autre partie de recouvrement, est plus haute que la partie plane du panneau à l'autre extrémité.

2. Panneau de construction photovoltaïque selon la revendication 1, **caractérisé en ce que** les parties profilées (10) sur les éléments photovoltaïques (12) sont agencées au moins deux par deux côte à côte, tandis qu'au moins un profil (9c) a été formé entre deux parties profilées adjacentes (10) parallèlement aux bords latéraux (9a) et (9b), les extrémités extérieures du panneau (8) comprennent aux deux extrémités au moins deux parties de recouvrement (11), et les parties profilées adjacentes (10) et les éléments photovoltaïques (12) installés dans celles-ci et les parties de recouvrement (11) sont séparés par un profil (9c), qui s'étend sur toute la longueur du panneau (8) d'un bout à l'autre.

3. Panneau de construction photovoltaïque selon la revendication 1 ou 2, **caractérisé en ce qu'un** panneau sandwich a été ajouté sous le panneau (8).
